# EUROPÄISCHE PATENTSCHRIFT

(11) **EP 1 588 093 B1**
(45) Veröffentlichungstag und Bekanntmachung des Hinweises auf die Patenterteilung: **02.03.2011**
(21) Anmeldenummer: 04702635.6
(22) Anmeldetag: 16.01.2004
(51) Int. Cl.: F21S 8/10, B60Q 1/26, F21V 19/00

(54) **LEUCHTE, INSBESONDERE HECKLEUCHTE FÜR KRAFTFAHRZEUGE, SOWIE TRÄGER, VORZUGSWEISE FÜR EINE SOLCHE LEUCHTE**
LIGHT, ESPECIALLY A REAR LIGHT FOR MOTOR VEHICLES, IN ADDITION TO A CARRIER, PREFERABLY FOR SAID TYPE OF LIGHT
DISPOSITIF LUMINEUX, NOTAMMENT FEU ARRIERE POUR VEHICULES AUTOMOBILES, ET SUPPORT DESTINE DE PREFERENCE A UN TEL DISPOSITIF LUMINEUX

(30) Priorität: 31.01.2003 DE 10304832
(43) Veröffentlichungstag der Anmeldung: 26.10.2005
(73) Patentinhaber: odelo GmbH, 71409 Schwaikheim (DE); odelo LED GmbH, 47475 Kamp-Lintfort (DE)
(72) Erfinder: BUTZ, Thomas, 70736 Fellbach (DE); MANTH, Thomas, 52064 Aachen (DE); SCHWEGLER, Veit, 47441 Moers (DE); OLKAY, Cem, 58454 Witten (DE)
(74) Vertreter: Meyer, Thorsten
(86) Internationale Anmeldenummer: PCT/DE2004/000048
(87) Internationale Veröffentlichungsnummer: WO 2004/068028

(56) Entgegenhaltungen:
- DE-A- 10 020 099
- US-A- 4 874 913
- US-A- 5 404 282
- US-A- 5 490 049
- US-B1- 6 406 173
- PATENT ABSTRACTS OF JAPAN Bd. 1998, Nr. 10, 31. August 1998 (1998-08-31) & JP 10 144113 A (NABIO KK), 29. Mai 1998 (1998-05-29)

## Beschreibung

Die Erfindung betrifft eine Leuchte, insbesondere eine Heckleuchte für Kraftfahrzeuge, nach dem Oberbegriff des Anspruches 1.

Um die Leuchtmittel möglichst konturnah an der Leuchte bzw. der Lichtscheibe anzuordnen, ist es bekannt, die Leuchtmittel auf stufig zueinander angeordneten Teilplatinen zu befestigen, die über Kabel miteinander verbunden sind. Diese Ausbildung erfordert einen großen Montageaufwand und führt leicht zu Montagefehlern. Die Leuchtmittel sind zudem stehend auf den Platinen angeordnet, so daß der erforderliche Einbauraum groß ist.

DE 100 20 099 A offenbart eine leuchte, die je zweiseitig an dem Träger angelötete LEDs aufweist.

Der Erfindung liegt die Aufgabe zugrunde, eine Leuchte bzw. einen Träger dieser Art so auszubilden, daß sie einfach und kostengünstig hergestellt und in kleine Einbauräume eingebaut werden kann.

Diese Aufgabe wird bei einer Leuchte der gattungsbildenden Art erfindungsgemäß mit den kennzeichnenden Merkmalen des Anspruches 1 gelöst.

Infolge der erfindungsgemäßen Ausbildung sind die Leuchtmittel an einem der Lichtscheibe benachbarten Rand des Trägers so angeordnet, daß sie im wesentlichen der Kontur der Lichtscheibe folgen. Da das Leuchtmittel liegend an der Trägerseite angeordnet ist, nimmt der Träger mit dem Leuchtmittel nur wenig Raum in Anspruch. Der erfindungsgemäße Träger kann darum auch in kleinen Einbauräumen bequem untergebracht werden, selbst wenn der Träger mit einer Vielzahl von Leuchtmitteln ausgestattet ist.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt
- Fig. 1: in schematischer Darstellung und im Schnitt einen Teil ei- ner erfindungsgemäßen Leuchte mit einem erfindungsge- mäßen Träger für Leuchtmittel,
- Fig. 2: eine weitere Ausführungsform eines erfindungsgemäßen Trägers in Seitenansicht,
- Fig. 3: einen Schnitt gemäß der Linie III-III in Fig. 2,

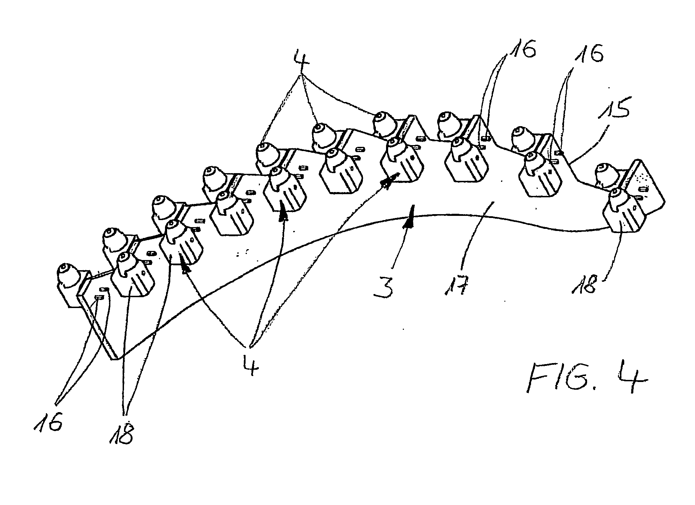

- Fig. 4: eine weitere Ausführungsform eines Trägers mit Leucht- mitteln in einer Darstellung entsprechend Fig. 2,
- Fig. 5: zwei nebeneinander angeordnete Träger mit Leuchtmitteln in perspektivischer Darstellung.

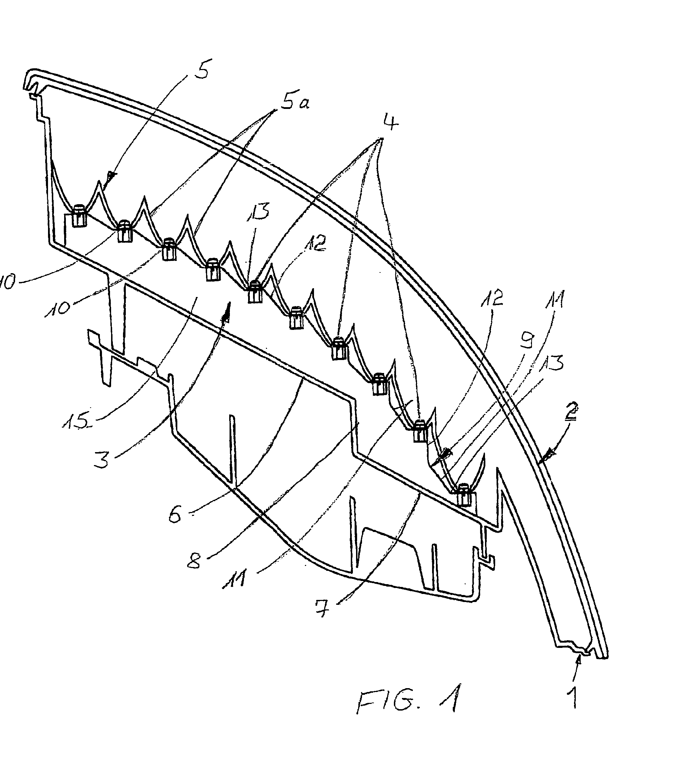

Fig. 1 zeigt eine Leuchte, die als Rückleuchte für ein Kraftfahrzeug ausgebildet ist. Sie hat ein Gehäuse 1, dessen Gehäuseöffnung mit einer Lichtscheibe 2 abgedeckt ist, hinter der mit Abstand ein Träger 3 angeordnet ist, der eine Vielzahl von als LEDs 4 ausgebildeten Leuchtmitteln trägt. Jeder der LEDs 4 ist ein in Ansicht gemäß Fig. 1 etwa parabolförmiger Abschnitt 5a eines Reflektors 5 zugeordnet, der vorteilhaft einstückig ausgebildet ist. Die LEDs 4 sitzen, wie noch erläutert wird, mit vorzugsweise etwa gleichem Abstand vom Lichtfenster 2. Der Träger 3 ist vorzugsweise eine Leiterplatine und liegt mit einem unteren Rand 6 auf einem Boden 7 des Gehäuses 1 auf. Der Boden 7 und der Rand 6 weisen eine mittlere Stufe 8 auf. Der Träger 3 kann hochkant und senkrecht zur Lichtscheibe 2 angeordnet sein und benötigt nur wenig Einbauraum.

Der der Lichtscheibe 2 zugewandte obere Rand 9 des Trägers 3 ist im Ausführungsbeispiel zahnartig profiliert. Er weist mit Abstand voneinander liegende, rechtwinklig ausgebildete schulterförmige Abschnitte 10 auf, die über Zwischenabschnitte 11 miteinander verbunden sind. Die Abschnitte 10 haben eine schräg gegen die Lichtscheibe 2 verlaufende Schulterfläche 12, die winklig in eine quer verlaufende Schulterfläche 13 übergeht. Sie schließt stumpfwinklig an den Zwischenabschnitt 11 an, der seinerseits stumpfwinklig an die Schulterfläche 12 anschließt. Die Zwischenabschnitte 11 sind im Ausführungsbeispiel länger als die Schulterflächen 12 bzw. 13. Die LEDs 4 sind vorzugsweise mit gleichem Abstand hintereinander am Rand 9 des Trägers 3 befestigt. Die LEDs 4 sind an der einen Seitenfläche 15 im Bereich der schulterförmigen Abschnitte 10 des Randes 9 befestigt. Wie Fig. 1 zeigt, sind die LEDs 4 parallel zueinander so angeordnet, daß ihre Längsachsen parallel zur Seitenfläche 15 des Trägers 3 liegen. Die LEDs 4 liegen auf diese Weise eng benachbart zur Trägerseitenfläche 15. Die in Fig. 1 nicht dargestellten Kontaktfüße des LEDs sind winklig abgebogen und ragen durch Öffnungen im Träger 3. Auf der anderen Trägerseite sind die Kontaktfüße in bekannter Weise mit elektrischen Leiterbahnen verbunden.

Die LEDs 4 sind so am Träger 3 angeordnet, daß sie über die Randabschnitte 13 in Richtung auf die Lichtscheibe 2 ragen. Der Trägerrand 9 verläuft in bezug auf die Lichtscheibe 2 so, daß die LEDs 4 in einer der Lichtscheibenkontur folgenden Reihe liegen.

Der Träger 3 kann mit dem Reflektor 5 auch einstückig ausgebildet sein.

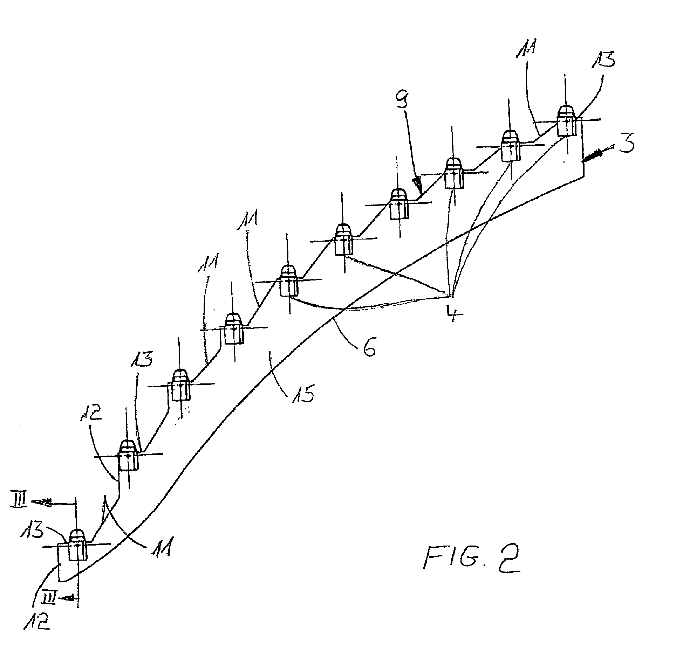

Die Ausführungsform gemäß Fig. 2 unterscheidet sich lediglich dadurch von derjenigen nach Fig. 1, daß der von der Lichtscheibe 2 abgewandte Rand 6 des Trägers 3 etwa S-förmig gekrümmt ist. Der gegenüberliegende Rand 9 ist wie bei der Ausführungsform gemäß Fig. 1 stufenartig ausgebildet, wobei die LEDs 4 im Bereich der schulterförmigen Abschnitte 12, 13 angeordnet sind. Die LEDs 4 liegen auf einer konvex nach außen gekrümmten Bahn, deren Verlauf der Kontur der gekrümmten Lichtscheibe 2 entspricht.

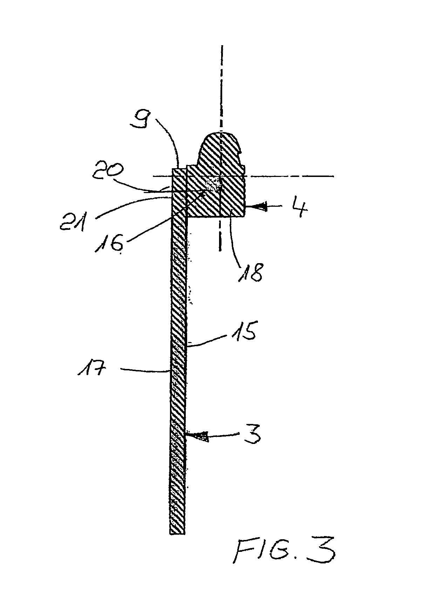

Fig. 3 zeigt in vergrößerter Darstellung die Anordnung einer der LEDs an der Seitenfläche 15 des Trägers 3. Die Kontaktfüße 16 der LEDs 4 sind geschützt in einem Spritzkörper 18 untergebracht, der an die LEDs angespritzt ist. Der Spritzkörper 18 hat vorteilhaft eine ebene Anlagefläche 20, mit der er an der Seitenwand 15 des Trägers 3 anliegt. Der Spritzkörper 18 mit der LED 4 kann in jeder geeigneten Weise am Träger 3 befestigt werden. Es ist auch möglich, bei entsprechender Ausbildung den Spritzkörper 18 unmittelbar an den Träger 3 anzuspritzen. Der Träger 3 ist für den Durchtritt der Kontaktfüße 16 mit Durchstecköffnungen 21 versehen. Die Kontaktfüße 16 sind im Spritzkörper 18 geschützt untergebracht. Die durch die Öffnungen 21 des Trägers 3 ragenden Enden der Kontaktfüße 16 werden an der Plattenseite 17 in der beschriebenen Weise mit den (nicht dargestellten) Leiterbahnen verbunden, beispielsweise durch Löten.

Die LEDs 4 liegen zunächst in Form eines Leadframestreifens vor, in dem die LEDs in einer Reihe nebeneinander angeordnet sind. Die Kontaktfüße 16 der LEDs4 werden zunächst um 90° gebogen. Die gebogenen Kontaktfüße 16 werden zur Bildung des Spritzkörpers 18 umspritzt, der im Ausführungsbeispiel als Quader ausgebildet ist. Anschließend werden die LEDs 4 vereinzelt und in der beschriebenen Weise am Träger 3 befestigt. Die LEDs 4 werden trotz der gebogenen Kontaktfüße 16 wie herkömmliche LEDs mit geraden Kontaktfüßen senkrecht an die Seitenfläche 15 des Trägers 3 herangeführt und mit ihm verbunden.

Über die Anlagefläche 20 der Spritzkörper 18 lassen sich die LEDs 4 einwandfrei am Träger 3 gegenüber der Lichtscheibe 2 ausrichten. Die Anstrahlrichtung der LEDs 4 entspricht der Hauptabstrahlrichtung der Leuchte.

Da der Träger 3 als dünne Leiterplatine ausgebildet ist und die LEDs 4 flach am Träger 3 anliegen, kann der Träger auch in schmalen Leuchten eingebaut werden.

Der Träger 3, der gleich ausgebildet ist wie der Träger nach den Fig. 2 und 3, ist an beiden Seiten 15, 17 längs seines Randes 9 mit LEDs 4 versehen. Die mit Abstand voneinander liegenden LEDs 4 der Trägerseite 15 liegen auf Lücke zu den mit Abstand voneinander liegenden LEDs 4 der Trägerseite 17. Die Kontaktfüße 16 der LEDs 4 ragen über die jeweils gegenüberliegende Trägerseite 15, 17. Die LEDs 4 sind entsprechend den vorigen Ausführungsbeispielen mit dem Spritzkörper 18 versehen.

Die beiden LED-Reihen haben einen Abstand voneinander, der der Dicke des Trägers 3 entspricht. Somit kann auf kleinstem Raum eine große Zahl von LEDs 4 untergebracht werden. Abweichend vom dargestellten Ausführungsbeispiel können die LEDs 4 der beiden Reihen auch einander gegenüberliegen.

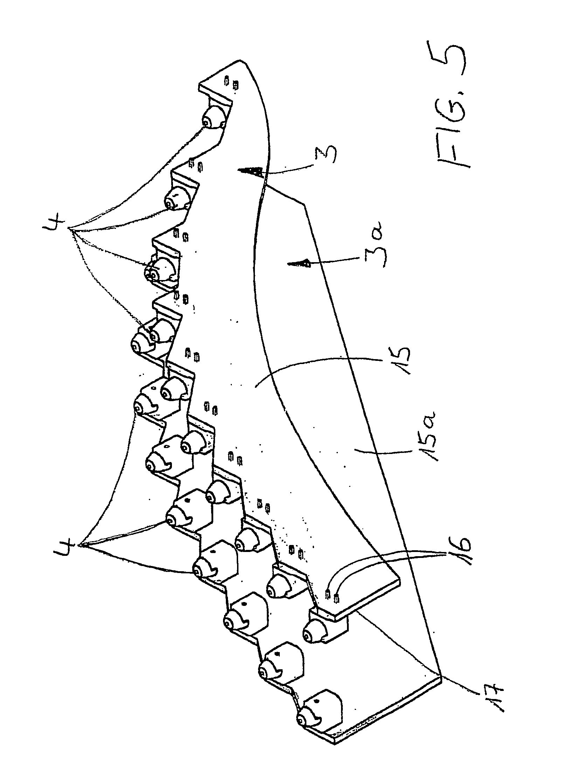

Bei der Ausführungsform nach Fig. 5 sind zwei im wesentlichen gleich ausgebildete Träger 3 und 3a mit Abstand nebeneinander angeordnet. Der Träger 3 ist gleich ausgebildet wie der Träger gemäß Fig. 2. Er weist an der Trägerseite 15 die mit Abstand hintereinander angeordneten LEDs 4 auf. Der andere Träger 3a unterscheidet sich vom Träger 3 nur dadurch, daß er etwas höher und in Seitenansicht etwa trapezförmig ausgebildet ist. Die LEDs 4 sind an der Trägerseite 15a befestigt. Die LEDs 4 sind somit an den einander zugewandten Seiten 15a, 17 der beiden Träger 3, 3a vorgesehen. Durch entsprechende Anordnung der Träger 3, 3a zueinander können diese optimal an die jeweilige Kontur der Lichtscheibe 2 angepaßt werden. Selbstverständlich können anstelle der beiden Träger 3 und 3a auch weitere Träger verwendet werden, wenn größere Lichtscheiben vorgesehen sind.

Bei den beschriebenen Ausführungsformen ist der Träger 3, 3a als Leiterplatine ausgebildet. Als Träger 3, 3a können auch Platten und dgl. eingesetzt werden, die die LEDs 4 in der beschriebenen Weise tragen. Die Stromzuführung an die LEDs 4 kann in diesem Fall über Leitungen erfolgen, die in geeigneter Weise an den Platten befestigt sind.

Als Leuchtmittel kommen auch Glühlampen und andere lichtabstrahlende Elemente in Betracht. Die verschiedenen Leuchtmittelarten können auch in Kombination verwendet werden.

Die LEDs 4 sind so am Träger 3, 3a vorgesehen, daß ihre Achsen parallel zueinander liegen. Je nach Einsatzfall können die LEDs 4 auch gegeneinander geneigt sein, um eine gewünschte Abstrahlwirkung der Leuchte zu erreichen.

Die LEDs 4 können am Träger 3, 3a, falls notwendig, auch ungleichmäßig verteilt angeordnet werden. Je nach Aufgabe der LEDs 4 können sie eingefärbt sein bzw. farbiges Licht aussenden. Der Träger 3, 3a mit den LEDs 4 kann beispielsweise für Brems- oder Blinkleuchten eingesetzt werden.

Der Träger 3, 3a mit den Leuchtmitteln 4 kann überall dort eingesetzt werden, wo nur ein kleiner Einbauraum zur Verfügung steht, z.B. im Innenraum des Kraftfahrzeuges, wie in der Armaturentafel, im Dachhimmel und dgl.

Die LEDs 4 können auch ohne Spritzkörper 18 ausgebildet sein. Die Kontaktfüße 16 liegen dann frei und werden in der beschriebenen Weise mit der elektrischen Zuleitung verbunden.

## Patentansprüche

1. Leuchte, insbesondere Heckleuchte für Kraftfahrzeuge, mit mindestens einem Träger (3, 3a), der hinter einer Lichtscheibe (2) angeordnet ist und auf dem Kontaktteile (16) aufweisende LEDs (4), vorzugsweise mehrere hintereinander angeordnete LEDs so angeordnet sind, dass die LEDs (4) im Wesentlichen der Kontur der Lichtscheibe (2) folgen, wobei die LEDs (4) an mindestens einer Seite (15, 15a, 17) des Trägers (3, 3a) anliegend befestigt sind, und die Längsachsen der LEDs (4) im Wesentlichen parallel zu der Seitenwand (15, 17) des Trägers (3, 3a) verlaufen, an der die LEDs (4) befestigt sind,
**dadurch gekennzeichnet, dass**
die LEDs (4) liegend an der Seite (15, 15a, 17) des Trägers (3, 3a) angeordnet sind und die Kontaktteile (16) der LEDs (4) winklig abgebogen geschützt in mindestens einem Spritzkörper (18) untergebracht sind, der an die LEDs (4) angespritzt ist und der eine bei liegender Anordnung der LEDs (4) an den Träger (3, 3a) anliegende Anlagefläche (20) aufweist.

2. Leuchte nach Anspruch 1,
**dadurch gekennzeichnet, dass** der Träger (3, 3a) quer, vorzugsweise senkrecht zur Lichtscheibe (2) angeordnet ist.

3. Leuchte nach Anspruch 1 oder 2,
**dadurch gekennzeichnet, dass** der Träger (3, 3a) Durchstecköffnungen (21) für die Kontaktteile (16) der LEDs (4) aufweist.

4. Leuchte nach Anspruch 3,
**dadurch gekennzeichnet, dass** die Durchstecköffnungen (21) mit Abstand von dem der Lichtscheibe (2) zugewandten Rand (9) des Trägers (3, 3a) vorgesehen sind.

5. Leuchte nach einem der Ansprüche 1 bis 4,
**dadurch gekennzeichnet, dass** an beiden Seitenwänden (15, 17) des Trägers (3, 3a) LEDs (4) vorgesehen sind.

6. Leuchte nach einem der Ansprüche 1 bis 5,
**dadurch gekennzeichnet, dass** an dem der Lichtscheibe (2) zugewandten Rand (9) des Trägers (3, 3a) eine Vielzahl von mit vorzugsweise gleichem Abstand hintereinander liegenden LEDs (4) vorgesehen sind.

7. Leuchte nach einem der Ansprüche 1 bis 6,
**dadurch gekennzeichnet, dass** mindestens ein weiterer Träger (3, 3a) vorgesehen ist.

8. Leuchte nach Anspruch 7,
**dadurch gekennzeichnet, dass** die Träger (3, 3a) mit Abstand nebeneinander liegen.

9. Leuchte nach Anspruch 7 oder 8,
**dadurch gekennzeichnet, dass** die LEDs (4) an den einander zugewandten Seiten (15a, 17) der Träger (3, 3a) angeordnet sind.

10. Leuchte nach einem der Ansprüche 1 bis 9,
**dadurch gekennzeichnet, dass** der der Lichtscheibe (2) zugewandte Rand (9) des Trägers (3, 3a) zahnartig profiliert ist.

11. Leuchte nach einem der Ansprüche 1 bis 10,
**dadurch gekennzeichnet, dass** der LED (4) ein Reflektor (5) zugeordnet ist.

12. Leuchte nach Anspruch 11,
**dadurch gekennzeichnet, dass** der Träger (3, 3a) und der Reflektor (5) einteilig ausgebildet sind.

13. Leuchte nach einem der Ansprüche 1 bis 12,
**dadurch gekennzeichnet, dass** der Träger (3, 3a) als Leiterplatine ausgebildet ist.

14. Leuchte nach einem der vorhergehenden Ansprüche,
**dadurch gekennzeichnet, dass** die LEDs (4) über den Rand (9, 13) des Trägers (3, 3a, 3b) ragen.

15. Leuchte nach einem der vorhergehenden Ansprüche,
**dadurch gekennzeichnet, dass** die LEDs (4) parallel zueinander liegen.

16. Leuchte nach einem der vorhergehenden Ansprüche,
**dadurch gekennzeichnet, dass** die Kontaktteile (16) der LED (4) teilweise in einem Spritzkörper (18) liegen.

17. Leuchte nach einem der vorhergehenden Ansprüche,
**dadurch gekennzeichnet, dass** der Spritzkörper (18) eckigen Querschnitt hat.

18. Leuchte nach einem der vorhergehenden Ansprüche,
**dadurch gekennzeichnet, dass** die Kontaktteile (16) der LEDs (4) um 90° winklig abgebogen sind.

19. Leuchte nach einem der vorhergehenden Ansprüche,
**dadurch gekennzeichnet, dass** der Spritzkörper (18) eine ebene Anlagefläche (20) hat, mit der er an der Seitenwand (15) des Trägers (3) anliegt.

20. Leuchte nach einem der vorhergehenden Ansprüche,
**dadurch gekennzeichnet, dass** der Spritzkörper (18) an den Träger (3) angespritzt ist.

## Claims

1. A light, in particular rear light for motor vehicles, with at least one carrier (3, 3a) which is arranged behind a lamp lens (2) and on which LEDs (4), preferably several LEDs arranged one behind the other, having contact parts (16) are arranged so that the LEDs (4) substantially follow the contour of the lamp lens (2), wherein the LEDs (4) are fastened lying against at least one side (15, 15a, 17) of the carrier (3, 3a), and the longitudinal axes of the LEDs (4) run substantially parallel to the side wall (15, 17) of the carrier (3, 3a), on which the LEDs (4) are fastened,
**characterized in that**
the LEDs (4) are arranged lying on the side (15, 15a, 17) of the carrier (3, 3a) and the contact parts (16) of the LEDs (4) are housed, bent at an angle, in a protected manner in at least one injected body (18) which is injected onto the LEDs (4) and which has a contact surface (20) lying against the carrier (3, 3a) with a horizontal arrangement of the LEDs (4).

2. The light according to claim 1,
**characterized in that** the carrier (3, 3a) is arranged transversely, preferably perpendicularly to the lamp lens (2).

3. The light according to claim 1 or 2,
**characterized in that** the carrier (3, 3a) has insertion openings (21) for the contact parts (16) of the LEDs (4).

4. The light according to claim 3,
**characterized in that** the insertion openings (21) are provided at a distance from the edge (9) of the carrier (3, 3a) facing the lamp lens (2).

5. The light according to one of claims 1 to 4,
**characterized in that** LEDs (4) are provided on both side walls (15, 17) of the carrier (3,3a).

6. The light according to one of claims 1 to 5,
**characterized in that** a plurality of LEDs (4) lying one behind the other with preferably equal spacing are provided on the edge (9) of the carrier (3, 3a) facing the lamp lens (2).

7. The light according to one of claims 1 to 6,
**characterized in that** at least one further carrier (3,3a) is provided.

8. The light according to claim 7,
**characterized in that** the carriers (3, 3a) lie spaced apart, adjacent to each other.

9. The light according to claim 7 or 8,
**characterized in that** the LEDs (4) are arranged on the sides (15a, 17) of the carriers (3, 3a) which face each other.

10. The light according to one of claims 1 to 9,
**characterized in that** the edge (9) of the carrier (3, 3a) facing the lamp lens (2) is profiled in a toothlike manner.

11. The light according to one of claims 1 to 10,
**characterized in that** a reflector (5) is associated with the LED (4).

12. The light according to claim 11,
**characterized in that** the carrier (3, 3a) and the reflector (5) are constructed in one piece.

13. The light according to one of claims 1 to 12,
**characterized in that** the carrier (3, 3a) is constructed as a printed circuit board.

14. The light according to one of the preceding claims,
**characterized in that** the LEDs (4) project over the edge (9, 13) of the carrier (3, 3a, 3b).

15. The light according to one of the preceding claims,
**characterized in that** the LEDs (4) lie parallel to each other.

16. The light according to one of the preceding claims,
**characterized in that** the contact parts (16) of the LED (4) lie partially in an injected body (18).

17. The light according to one of the preceding claims,
**characterized in that** the injected body (18) has a angular cross-section.

18. The light according to one of the preceding claims,
**characterized in that** the contact parts (16) of the LEDs (4) are bent in an angled manner through 90°.

19. The light according to one of the preceding claims,
**characterized in that** the injected body (18) has a flat contact surface (20) by which it lies against the side wall (15) of the carrier (3).

20. The light according to one of the preceding claims,
**characterized in that** the injected body (18) is injected onto the carrier (3).

## Revendications

1. Lampe, en particulier lampe arrière pour véhicules automobiles, comprenant un support (3, 3a), qui est disposé derrière un disque de lumière (2) et sur lequel sont disposées des LEDs (4) présentant des parties de contact (16), de préférence plusieurs LEDs disposées les unes derrière les autres, de sorte que les LED (4) suivent principalement le contour du disque lumineux (2), les LED (4) étant fixées de façon adjacente sur moins un côté (15, 15a, 17) du support (3, 3a), et que les axes longitudinaux des LEDs (4) sont agencés sensiblement parallèlement à la paroi latérale (15, 17) du support (3, 3a) sur laquelle les LED (4) sont fixées,
**caractérisée en ce que**
les LEDs (4) sont disposées à plat sur le côté (15, 15a, 17) du support (3, 3a) et les parties de contact (16) des LEDs (4) sont logées dans au moins un corps injecté (18), protégées et coudées en angle, lequel corps est appliqué par injection sur les LEDs (4) et présente une surface d'appui (20) adjacente au support (3, 3a) avec un agencement à plat des LEDs (4).

2. Lampe selon la revendication 1,
**caractérisée en ce que** le support (3, 3a) est disposé transversalement, de préférence perpendiculairement au disque lumineux (2).

3. Lampe selon la revendication 1 ou 2,
**caractérisée en ce que** le support (3, 3a) présente des ouvertures de traverse (21) pour les parties de contact (16) des LED (4).

4. Lampe selon la revendication 3,
**caractérisée en ce que** les ouvertures de traverse (21) sont prévues à distance du bord (9), tourné vers le disque lumineux (2) du support (3, 3a).

5. Lampe selon l'une quelconque des revendications 1 à 4,
**caractérisée en ce que** des LEDs (4) sont prévues sur les deux parois latérales (15, 17) du support (3, 3a).

6. Lampe selon l'une quelconque des revendications 1 à 5,
**caractérisée en ce qu'**une pluralité de LEDs (4) disposées les unes derrière les autres à une distance de préférence identique, est prévue sur le bord (9), tourné vers le disque lumineux (2), du support (3, 3a).

7. Lampe selon l'une quelconque des revendications 1 à 6
**caractérisée en ce qu'**au moins un autre support (3, 3a) est prévu.

8. Lampe selon la revendication 7,
**caractérisée en ce que** les supports (3, 3a) sont disposés à distance les uns à côté des autres.

9. Lampe selon la revendication 7 ou 8,
**caractérisée en ce que** les LED (4) sont disposées sur les côtés (15a, 17),tournés les uns vers les autres, des supports (3, 3a).

10. Lampe selon l'une quelconque des revendications 1 à 9,
**caractérisée en ce que** le bord (9), tourné vers le disque lumineux (2), du support (3, 3a) est profilé en forme de dent.

11. Lampe selon l'une quelconque des revendications 1 à 10,
**caractérisée en ce qu'**un réflecteur (5) est attribué à la LED (4).

12. Lampe selon la revendication 11,
**caractérisée en ce que** le support (3, 3a) et le réflecteur (5) sont conçus d'une seule pièce.

13. Lampe selon l'une quelconque des revendications 1 à 12,
**caractérisée en ce que** le support (3, 3a) est conçu sous forme de platine à circuits imprimés.

14. Lampe selon l'une quelconque des revendications précédentes,
**caractérisée en ce que** les LEDs (4) dépassent du bord (9, 13) du support (3, 3a, 3b).

15. Lampe selon l'une quelconque des revendications précédentes,
**caractérisée en ce que** les LEDs (4) sont disposées parallèlement entre elles.

16. Lampe selon l'une quelconque des revendications précédentes,
**caractérisée en ce que** les parties de contact (16) de la LED (4) sont disposées partiellement dans un corps injecté (18).

17. Lampe selon l'une quelconque des revendications précédentes,
**caractérisée en ce que** le corps injecté (18) a une section transversale anguleuse.

18. Lampe selon l'une quelconque des revendications précédentes,
**caractérisée en ce que** les parties de contact (16) des LED (4) sont coudées avec un angle de 90°.

19. Lampe selon l'une quelconque des revendications précédentes,
**caractérisée en ce que** le corps injecté (18) a une surface d'appui (20) plane, avec laquelle il s'applique sur la paroi latérale (15) du support (3).

20. Lampe selon l'une quelconque des revendications précédentes,
**caractérisée en ce que** le corps injecté (18) est formé par projection sur le support (3).
